(19) **Europäisches Patentamt**
**European Patent Office**
**Office européen des brevets**

(11) **EP 2 727 884 A1**

(12) **EUROPEAN PATENT APPLICATION**

(43) Date of publication:
**07.05.2014 Bulletin 2014/19**

(51) Int Cl.:
*C02F 1/24* (2006.01)          *C02F 1/28* (2006.01)
*C02F 101/30* (2006.01)        *C02F 103/14* (2006.01)
*C02F 103/28* (2006.01)

(21) Application number: **12007536.1**

(22) Date of filing: **06.11.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: UPM-Kymmene Corporation
**00130 Helsinki (FI)**

(72) Inventors:
• **Kujala, Asta**
  **53850 Lappeenranta (FI)**

• **Roßkopf, Susanne**
  **86153 Augsburg (DE)**
• **Engert, Peter**
  **86438 Kissing (DE)**
• **Künzel, Ulf**
  **86459 Gessertshausen (DE)**

(74) Representative: HOFFMANN EITLE
**Patent- und Rechtsanwälte**
**Arabellastrasse 4**
**81925 München (DE)**

(54) **Process for removing flexographic ink and water-based inkjet ink from aqueous media and use of agents for removal of flexographic ink and water-based inkjet ink from aqueous media**

(57) The present invention relates to a process for removing inks, i.e. flexographic ink and/or water-based inkjet ink from aqueous media containing such inks, in particular from water circuits in recycled fibers/deinking lines. The present invention also relates to the use of agents for removal of flexographic ink and/or water-based inkjet ink from aqueous media containing such inks.

EP 2 727 884 A1

**Description**

**1. Technical field**

The present invention relates to a process for removing inks, i.e. flexographic ink and/or water-based inkjet ink from aqueous media containing such inks, in particular from water circuits in recycled fibers/deinking lines. The present invention also relates to the use of agents for removal of flexographic ink and/or water-based inkjet ink from aqueous media containing such inks.

**2. Background art**

The trend in the paper industries to reduce water consumption and discharge involves the closure of water circuits in recycled fiber paper mills in order to enable water reuse, to reduce the amount of chemicals fed into the process as well as to prevent loss of fibers with process water.

Simultaneously, the printing industry has developed. Conventional printing technologies, like offset lithography and rotogravure, are more and more replaced by flexographic prints and printing with water-based inkjet inks. Flexographic and inkjet printing however differ greatly from the conventional printing technologies and so do the inks used in the different processes.

Thus, with the ongoing changes, the proportion of flexographic and inkjet prints in recovered paper continues to rise. But, while conventional inks show good deinkability, flexographic ink and water-based inkjet ink are not effectively removed by the conventional deinking processes and are present in either the pulp and/or the filtrate water of recycled fiber paper mills.

Due to the effective water circulation, contaminants are recirculated back into the process and may become enriched in the loop waters of the plants. As the flexographic inks and water-based inkjet inks show a high tendency to migrate in the process water and as these contaminants are not efficiently removed, they will be carried over to the paper machine and reduce the quality of the recycled paper.

Various ways to remove said ink-based contaminants in the internal water purification have been described.

The membrane filtration technology is increasingly popular in water purification and should in theory be applicable also in process water treatment. However, irreversible membrane fouling by various impurities of process water, frequent maintenance and renewing of membrane units that always occur, as well as the problems associated with upscaling, reveal strong disadvantages of said technology.

The dissolved air flotation (hereafter also referred to as "DAF") water clarification process is a state-of-the-art technology for circuit water treatment as DAF can handle the large water flow in water loops of a deinking line. The removal efficiency of conventional contaminants in a DAF unit is typically above 95 %. Solid suspended particles of sufficient particle size, such as conventional inks, are removed efficiently with DAF technology. However, flexographic ink and/or water-based inkjet ink are more difficult to remove due to their small particle sizes. This also affects DAF-based water treatments. It is therefore generally believed that purification of flexographic ink and/or water-based inkjet ink contaminated process water by means of DAF technology cannot be accomplished in a satisfactory manner.

The colloidal Gas Aphrons (CGA) technique has been described for separation of contaminants by creating a special type of foam on cell surface. The removal of water-based printing inks and impurities from paper stock suspensions using an operation chemistry including a non-ionic surface and a flocculant has been shown (Voβ, D., & Schabel, S. 2010. Use of colloidal gas aphrons for separation of water based printing inks and impurities from paper stock suspensions. In: INGEDE, 9th Research forum on Recycling. 18 - 21 October 2010, Norfolk, VA, USA). However, the CGA technique for removal of flexographic ink and/or water-based inkjet ink is not satisfactory.

Further, the use of dye absorbing and pigment particle collectors such as activated carbon or the use of conventional color stripping by bleaching has been suggested for purification of water circuits in deinked pulp plants. However, due to the large water flow in the water circuits all these technologies do not provide satisfactory results.

Thus, there is a need for a technology that allows efficient removal of flexographic inks and water-based inkjet inks from aqueous media, especially in water circuits of deinked pulp lines.

**DISCLOSURE OF THE INVENTION**

**3. Problem solved by the invention**

Conventionally deinking processes are non-satisfying in removing flexographic ink and water-based inkjet ink contaminations from aqueous media, in particular from water circuits of deinked pulp lines.

It is an object of the present invention to provide an efficient and economic process for removal of flexographic ink and water-based inkjet ink from aqueous media containing such inks. It is further an object to provide chemicals that can be used for an efficient removal of flexographic ink and water-based inkjet ink from aqueous media containing such inks.

## 4. Means for solving the problem

The present inventors found that a process as defined in any one of claims 1 to 11 solves the above problem.
The second aspect of the underlying problem is solved by the uses of certain chemical substances as defined in any one of claims 12 to 15.

## 5. Detailed description of the invention

### 5.1 Definitions

### 5.1.1 Total suspended solids

The total suspended solids, also referred to as TSS, used in the context of the present invention is meant to be understood according to its way of determination. It is determined by filtering the water of interest with standard paper filter (PF) in a Büchner funnel. The PF is a *schwarzband* filter with average pore size of 12 - 25 $\mu$m. A 500 ml water sample is to be filtered and the filter is dried at 105 °C. The weight of dry filter is measured with a precision scale, the electronic analytical balance Sartorius A 200 S. The TSS is then calculated from the difference in filter weight before and after filtration and expressed as mg/L.

### 5.1.2 Cationic demand

The Cationic demand (sometimes referred to as "PCD"), as used in the present disclosure, is meant to be understood by its way of determination. Cationic demand is measured with a streaming current detector connected to an automatic titrator. The streaming current measurement device is also known as particle charge detector (referred to as "PCD"). The particle charge detector measures electric current generated by physical separation of counterions, while a cationic titrant is added to neutralize the charges. The amount of cationic titrant required to obtain zero current, is the cationic demand. The result is specified as consumption of the titratant solution with known charge concentration, as $\mu$eq/L, when zero current, i.e. point of zero charge, is achieved. The titratant to be used is a polyelectrolyte, namely poly-diallyl-dimethyl-ammonium-chlorides (polyDADMAC), as suggested by the Scandinavian Pulp, Paper and Board Testing Committee (2004). The sample is filtered with a standard paper filter prior to titration in order to eliminate fines that could interfere with the measurement. The sample conductivity should never exceed 5000 $\mu$S/cm. Cationic demand is measured with the particle charge detector Mütec PCD 03 and the automatic titrator Mettler DL21 Titrator.

### 5.1.3 Turbidity

In accordance with the present disclosure, turbidity is meant to be understood by the following ways of determination. Turbidity is measured with Formazin Attenuation Unit (FAU) turbidity measurement, operating at 860 nm following the ISO 7027 standard using the Hach-Lange DR2800 spectrophotometer. The FAU scale at 860 nm and the absorption at 980 nm correlate with each other, and prediction for the measurement at 980 nm based on the FAU scale at 860 nm can be made with a certainty of at least 98 %. In both scales the turbidity can be measured up to approximately 900 FAU. Thus, turbidity may also be measured using a Perkin-Elmer Lambda 2 UV/VIS spectrophotometer operating at 980 nm. The results are all reported in FAU scale due to the correlation.

### 5.1.4 The pH value

The pH value is measured with the Precision pH meter from WTW inoLab pH Level 1.

### 5.1.5 Zeta potential

The zeta potential as used in the context of the present invention is determined by its way of measuring. The zeta potential is measured with the System Zeta Potential Meter (Mütec SZP 06) according to the manufacture's instruction (available at http://www.btg.com/).

### 5.1.6 Ink Removal Efficiency

The Ink Removal Efficiency, also referred to as IRE, as used in the context of the present invention is meant to be understood by its way of determination. The IRE scale is a direct measurement based on UV/VIS wavelength absorption to evaluate the amount of ink removed from a certain water body. A high IRE value is meant to indicate an efficient removal of ink from the test solution.

For determining the IRE value, absorption spectra are measured with an UV/VIS spectrophotometer in the wavelength range of visible color, from 300 to 800 nm, and the peaks of the spectrums are assigned to different colored inks, magenta (M), cyan (C), yellow (Y). For determining the peak areas at different ink concentrations the spectroscopy analysis software OMNIC 8.2.388 from Thermo Fisher Scientific Inc. is used. In this manner, ink concentrations are determined for the ink of interest in water samples taken before and after the water treatment.

The IRE value is calculated from ink concentration before, $C_0$, and after, $C_1$, the water treatment, according to Equation 1.

$$IRE = \frac{c_0 - c_1}{c_0} \cdot 100\% \qquad \text{(Equation 1)}$$

When determining the IRE value, the turbidity and the concentration of the ink to be measured have to be taken into account.

Further, if the testing sample is flocculated, it is filtered with a paper filter which is capable of retaining solids bigger than 12 $\mu$m to remove flocs. An IRE measurement is then conducted for paper filter filtrate (PFF). In this case, $C_1$ means $C_{PPF}$ in Equation 1.

### 5.1.7 Particle Size

In the context of the present application, particle size indications refer to average particle diameters as determined by a N4 Multisizer, manufactured by Beckman Coulter (UK) Ltd, High Wycombe, UK. The N4 Multisizer measures the particle size by laser diffraction. The laser is scattered by the particles that are suspended in the continuous medium. The refractive index and the density of the continuous medium are known. The deflections caused by the particles in the continuous medium are collected, and translated into particle size values.

### 5.1.8 Process water in a recycled fiber paper mill

A typical water management scheme for a deinking mill using recovered paper as raw material usually includes as many water loops as there are flotation or washing steps plus one paper machine loop. The loops are typically numbered, starting with loop 1, which is located at the beginning of the plant, ending with the loop that is located directly before the last loop, which is the paper machine loop. A recycled fiber plant typically has three loops, loop 1, loop 2 and a paper machine loop.

In the context of the present invention it is meant to be understood that process water refers to all the water that is present in the water circuits of a deinked pulp plant including the water in all loops of the plant, the water from and in the paper machine, the water from and in filters in every loop, in particular the water from and in disc filters, from sludge thickening, from and in flotation units and from screw presses. The process water is also referred to as process water from deinked pulp lines. In the context of the present invention aqueous media is understood as process water from deinked pulp lines.

Unless otherwise specified, in the present disclosure the terms "clear filtrate" and "cloudy filtrate" are meant to be understood as filtrate waters from a disc filter of loop 1 of a recycled fiber plant, wherein the clear filtrate is the filtrate with less contaminants and the cloudy filtrate is the filtrate from a disc filter in the beginning of filter mat formation having a high load of contaminants. Process water includes clear and cloudy filtrates.

Some non-limiting water characteristics of a typical inlet flow to a DAF unit are represented in Table 1.

Table 1: Some water characteristics in the inlet flow to a DAF unit.

| Parameter | Range | Unit |
|---|---|---|
| pH | 7.0 - 8.0 | |
| Temperature | 50 - 60 | °C |
| Total suspended solids | 200 - 1000 | mg/L |
| Turbidity, UF | 300 - 750 | FAU |

(continued)

| Parameter | Range | Unit |
|---|---|---|
| *Cationic demand* | 800 - 2400 | $\mu$eq/L |

### 5.1.9 Contaminants

In the context of present invention contaminants are understood as all contaminants that accumulate in the process water of deinked pulp lines, wherein contaminates typically originate from the substrates used in said process. A typical substrate is recovered paper. Examples of contaminants in the process water are fines, fibers, fillers, residual inks, in particular flexographic ink and water-based inkjet ink, and binder resins, adhesives, starches and latices, as well as residual chemicals.

### 5.1.10 Dissolved colloidal substances

In the present disclosure dissolved colloidal substances are understood as materials that are dissolved materials or that form colloids in an aqueous medium. In the context of the present invention, dissolved materials are distinguished from colloids by their size, i.e. dissolved materials are typically characterized by an average particle diameter of 220 nm or below and colloids are typically characterized by an average particle diameter above 220 nm. In the context of the present invention dissolved materials typically exhibit an average diameter below 220 nm, more typically in the range from 1 nm to 220 nm and colloids typically exhibit an average diameter in the range from >220 nm to 5 $\mu$m, more typically in the range of >220 nm to 1 $\mu$m, even more typically in the range of >220 nm to 0.5 $\mu$m.

It is not always necessary to distinguish between dissolved and colloidal substances. The combined term dissolved colloidal substances refers to all of these substances, irrespective whether they may be classified as dissolved or colloidal substances. Residual inks, binder resins, adhesives, starches and latices are materials that are typically referred to as dissolved colloidal substances.

### 5.1.11 Ink contamination

In the context of the present invention it is meant to be understood that ink contaminants comprise all contaminants that originate from ink such as ink printed on the paper that is recycled, and which are present in the process water. This includes inks that have been used for printing and that are separated from printed substrate, e.g. during the paper recycling process.

In the present disclosure it is meant to be understood that ink contaminations in process water of deinked pulp lines comprise contaminants originating from conventional inks and contaminants originating from flexographic ink and/or water-based inkjet ink.

Conventional inks originate for example from inks used for offset lithography and rotogravure. Their particle size is typically in the $\mu$m range. In the paper recycling process, the particle size increases and typical ranges of conventional ink particle sizes in process water of a deinked pulp are between 2 and 300 $\mu$m. Contaminants in the process water originated from convention inks are typically hydrophobic.

### 5.1.12 Flexographic ink and flexographic ink contamination

In the context of the present invention, the term flexographic ink is meant to include solvent-based and water-based flexographic ink that contains colored pigments; it is mainly water-based flexographic ink. Flexographic ink may also contain carbon black as a colorant. The particle sizes of carbon black and colored pigments in fresh flexographic inks are typically in the range of 20 - 30 nm and 100 - 200 nm, respectively.

In the context of the present invention, it is a particularly relevant characteristic of flexographic inks that they are typically hydrophilic and that the particle sizes do not increase or increase to a lesser extent than conventional inks. Consequently, a typical particle size range of flexographic ink particles present in the pulp or process water is much smaller than the corresponding particle size range of conventional inks, in particular below 2 $\mu$m, preferably below 1$\mu$m, more preferably below 500 nm, even more preferably below 220 nm.

### 5.1.13 Water-based inkjet ink and water-based ink contamination

In the context of the present invention, water-based inkjet ink includes water-based inkjet inks, wherein the colorants may be dyes or pigments. These inkjet inks are also referred to as dye-based inkjet inks and pigment-based inkjet inks. Water-based inkjet ink may also contain carbon black.

The dye-based inkjet inks do not contain pigment particles as colorants. The color is caused by water-soluble molecular structures. A typical particle size in the process water of deinked pulps is the same as the size of the individual dissolved molecules, which is typically 220 nm or below, preferably 20 nm or below, and even more preferred 10 nm or below.

The pigment-based inkjet inks contain pigment particles as colorants that are typically in the range of 10 to 220 nm in the unprinted ink.

Contrary to the above-mentioned conventional inks, in the process water of recycled fiber plants, the colorants of the water-based inkjet inks are typically hydrophilic and do not significantly increase in size with respect to the unprinted ink and thus are typically in the range below 2 $\mu$m, preferably below 1 $\mu$m, more preferably below 500 nm, most preferably below 220 nm.

### 5.1.14 Indications of molecular weights and relative amounts

Unless specially stated otherwise, all indications of molecular weights of polymeric substances are meant to be indications of weight average molecular weight.

Unless specially stated otherwise, all indications of relative amounts or the like in % or ppm are meant to refer to indications on a weight basis.

### 5.2 The Process of the Invention

### 5.2.1 Overview

The process of the present invention concerns the treatment of process water to remove ink contaminants comprising flexographic ink and/or water-based inkjet ink. In a first step of the process (step (i)) at least one substance selected from a first group of processing chemicals (hereinafter referred to as "group 1") or from a second group of processing chemicals (hereinafter referred to as "group 2") is admixed to the process water. The resulting mixture is retained for a retention time in the range from 0 to 60 minutes after the admixing step (i). Subsequently, in a step (ii) at least one substance selected from the group 1, group 2 or a third group (hereinafter referred to as "group 3") is admixed to the mixture obtained in step (i). The resulting mixture is retained for a retention time in the range of 0 to 60 minutes after the admixing step (ii).

In an optional subsequent step, a processing chemical selected from group 3 is admixed to the mixture obtained in step (ii). The resulting mixture is retained for a retention time in the range of 0 to 60 minutes after the optional admixing step.

In a following step (iii) the flocculation in the resulting mixture obtained in step (ii) is removed by physical separation means, such as filtration, sedimentation or microflotation. Preferably the mixture is subjected to a microflotation procedure using a DAF unit. The treated process water is recovered from the physical separation/DAF unit. It contains a significantly reduced level of ink contamination. In particular the level of contamination with flexographic ink and/or water-based inkjet ink is significantly reduced.

There is no technical limitation especially regarding the upper limit of the retention time. It is nevertheless preferred that the retention time after an admixing step, i.e. the time before the following step is carried out, is in the range of from 0 seconds to 60 minutes. Preferably it is individually selected to be in the range of typically 10 seconds to 10 minutes, preferably in the range of 30 s to 5 min, more preferably in the range of 1 to 3 minutes, if a processing chemical of group 3 is admixed in the next step, whereas the retention time may be selected to be shorter in the range of typically 0 to 60 seconds, preferably 1 to 30 seconds, more preferably 2 to 15 seconds if a processing chemical of group 1 or 2 is admixed in the next step. The retention time after admixing a processing chemical of group 3 is not particularly limited. It may be from 0 to 60 minutes, preferably, 10 seconds to 10 minutes. It is particularly preferred to use the preferred or more preferred retention times specified in this paragraph in combination with the processing chemicals and processing chemical combinations as specified in the appended claims 2-10.

The temperature prior to and during steps (i) and (ii) is not further limited. It is practical to use the process water as recovered from the respective loop of the recycled fiber plant, without further adjustment of the temperature.

Prior the addition of chemicals from any one of the groups 1 to 3, the pH value of the process water is typically measured and preferably adjusted to a pH value in the range from 5 to 9, preferably in the range from 6 to 8, more preferably in the range from 6.5 to 7.5. The pH range is typically adjusted by the addition of sulphuric acid or sodium hydroxide.

## 5.2.2 Process water and its Contamination

In accordance with the present invention, there is no specific limitation of the process water to be treated except that it contains colorants derived from flexographic ink and/or from water-based inkjet ink. The presence and the relative amount of such colorants can in most cases be ascertained by analyzing the recovered paper that is recycled to yield the process water to be treated. A typical ratio of paper printed with flexographic and/or water-based inkjet ink is 5% or above, preferably 10% or above, more preferably 20% or above, even more preferably 30% or above or even 50% or above on a weight basis of all recovered paper. In one embodiment of the invention, the content of paper printed with dye-based water-based inkjet ink is 80 % or less.

Alternatively, it is also possible to analyze the process water as such, which is to be treated: in the context of the present invention, a process water from deinked pulp lines is to be understood as a process water containing colorants derived from flexographic ink and/or from water-based inkjet ink if it contains significant amounts (e.g. more than 0.001 ppm, preferably more than 0.01 ppm, more preferably more than 0.1 ppm, most preferably more than 1 ppm) of colorants with particles in the size ranges specified above, i.e. particles smaller than 2 $\mu$m, preferably below 1 $\mu$m, more preferably smaller than 500 nm, most preferably smaller than 220 nm. In one embodiment, the present invention pertains to the treatment of process water containing significant amounts of colorants with such particle sizes irrespective of the origin of the colorant particles.

A typical ratio of ink contaminants that originate from flexographic ink and/or water-based inkjet ink to all ink contaminants in the process water is 5% or above, preferably 10% or above, more preferably 20% or above, even more preferably 30% or above or even 50% or above on a weight basis. Considering that dyes are more difficult to remove than pigments, it is a preferred embodiment to treat process waters containing mainly pigments originating from flexographic ink and/or water-based inkjet ink and only a minor fraction of dyes originating from water-based inkjet ink. According to one embodiment of the invention, the ink contaminant to be removed according to the present invention is only flexographic ink or only water-based inkjet ink.

In process water of deinked pulp lines the contaminations that originate from any kind of ink are typically in a concentration range from 0.01 ppm to 2000 ppm, preferred from 0.1 ppm to 1000 ppm, more preferred from 1 ppm and 500 ppm, based on the weight of the process water.

## 5.2.3 Processing Chemicals

The processing chemicals used for the process of the present invention are classified as "group 1", "group 2" and "group 3" chemicals.

In the context of the present invention, references to admixing or the like are meant to be understood as adding the substance to the process water, or vice versa, and mixing the resulting composition.

Group 1 chemicals may be selected from aluminium salts, iron salts and bentonite. In preferred embodiments of the invention, the group 1 chemicals may be inorganic aluminium-based or iron-based salts, which can also be in polymeric form. Even more preferably, the group 1 chemicals are selected from the group consisting of bentonite, cationically surface-modified bentonite, alum, i.e. aluminium sulphate, aluminium nitrate and polyaluminium salts, e.g. polyaluminium salts, particularly preferred polyaluminium chloride.

Group 2 chemicals comprise cationic or anionic polymers having a molecular weight average molecular weight of 50 000 to 200 000 g/mol and preferably a charge density above 4 meq/g. The group 2 chemicals are preferably selected from the group consisting of polydiallyl-dimethyl-ammonium salts, polyamine, polyvinylamin, polyethylenimine, dicyandiamide-formaldehyde-ammonium salt, dicyandiamide-formaldehyde-copolymer.

Group 3 chemicals comprise anionic, cationic or nonionic polymers other than those of group 2, preferably anionic or cationic homo- and copolymers other than those of group 2, more preferably anionic or cationic homo- and copolymers comprising acrylamide-derived units (hereinafter referred to as "polyacrylamide"). In one embodiment, any substance generally known or used in water treatment technology as "flocculant" can be used as group 3 chemical.

If more than one selection from the same group is made, it is preferred that different members of the respective group are selected.

If a group 3 chemical is admixed in the process of the present invention, this chemical is to be admixed in the final admixing step.

The substances of groups 1, 2 and 3 are commercially available. Trade-names are given in Table 2 below.

## 5.2.4 Dual-component chemistry system

In a preferred process according to the invention, the group 1 chemical is a selected from bentonite, cationically modified bentonite and polyaluminium salt.

In a further preferred process according to the invention, the group 2 chemical is a selected from polyamine, dicyandiamide-formaldehyde-ammonium salt and dicyandiamide-formaldehyde-copolymers.

In a further preferred process of the invention two processing chemicals are selected from groups 1 and 2, wherein the group 1 chemical is a polyaluminium salt, and the group 2 chemical is a polyamine. It is particularly preferred to use this combination for removal flexographic ink and/or water-based inkjet ink which is/are pigment-based.

In a preferred process of the invention a first processing chemical is selected from groups 1 or 2 and a second processing chemical is selected from group 3, wherein the group 1 chemical, if present, is bentonite or cationically surface-modified bentonite, the group 2 chemical, if present, is selected from a dicyandiamide-formaldehyde-ammonium salt or a dicyandiamide-formaldehyde-copolymer, and the group 3 chemical is preferably a polyacrylamide. It is particularly preferred to use this combination for removal flexographic ink and/or water-based inkjet ink which is/are dye-based.

### 5.2.5 Multi-component chemistry system

In a preferred process according to the invention, three processing chemicals are selected from groups 1, 2 and 3, wherein the group 1 chemical is a polyaluminium salt or bentonite or cationically surface-modified bentonite, and the group 2 chemical is selected from the group consisting of polydiallyl-dimethyl-ammonium salts, polyamine, polyvinylamine, polyethylenimine, dicyandiamide-formaldehyde-ammonium salt, and dicyandiamide-formaldehyde-copolymers, and the group 3 chemical is preferably selected from cationic and anionic polyacrylamide.

In a further preferred process of the invention three processing chemicals are selected from groups 1, 2 and 3, wherein the group 1 chemical is a polyaluminium salt, and the group 2 chemical is a polyamine, and the group 3 is preferably a polyacrylamide. It is particularly preferred to use this combination for removal flexographic ink and/or water-based inkjet ink which is/are pigment-based.

In a further preferred process of the invention, three processing chemicals are selected from groups 1, 2 and 3, wherein the group 1 chemical is a bentonite or cationically surface-modified bentonite, and the group 2 chemical is selected from a dicyandiamide-formaldehyde-ammonium salt or a dicyandiamide-formaldehyde-copolymer, and the group 3 chemical is preferably a polyacrylamide. It is particularly preferred to use this combination for removal flexographic ink and/or water-based inkjet ink which is/are dye-based.

In a preferred process of the invention, three processing chemicals are selected from groups 1 and 3, wherein a first chemical selected from group 1 is an aluminium salt and a second chemical selected from group 1 is bentonite or cationically surface-modified bentonite, and wherein the group 3 chemical is preferably a polyacrylamide. It is also preferred to admix the aluminium salt first.

In a further preferred process of the invention three processing chemicals are selected from groups 1, 2 and 3, wherein the group 1 chemical is a polyaluminium salt, and the group 2 chemical is selected from a dicyandiamide-formaldehyde-ammonium salt or a dicyandiamide-formaldehyde-copolymer, and the group 3 chemical is preferably a polyacrylamide. It is particularly preferred to use this combination for removal flexographic ink and/or water-based inkjet ink which is/are pigment and/or dye-based.

Typically, the weight ratio of the group 1 chemicals to the group 2 chemicals is in a range from 1:10 to 10:1, preferably in a range from 1:3 to 3:1. Having regard to cost considerations, it is particularly preferred to use a greater amount of the group 1 chemical than group 2 chemical, for instance in the range between 10: 10 and 10:1 1 or better in the range between 3:3 and 3:1. A typical ratio of the sum of group 1 and group 2 chemicals to group 3 chemicals is 5:1 1 to 300:1, for instance 10:1 1 to 200:1, preferably 30:1 to 100:1.

### 5.2.6 Dosage

The dosage of the processing chemicals to be used in the process of the present invention is typically not fixed. It is desired to keep the chemical dosages at minimum, simultaneously maintaining adequate water quality. Therefore, it is essential to adjust the chemical dosage individually every time the process of the present invention is newly implemented.

In practice, before the addition of chemicals, a test procedure is preferably conducted to obtain information about the most appropriate dosage in a systematic manner. As a first step if this systematic approach, the process water to be treated can be subjected to analytic procedures to obtain information on the nature and concentration of the contaminants. This can be done by measuring for example the pH, the cationic demand, the turbidity, and/or the total suspended solid content. Based on the obtained information, an initial estimate can be made for a suitable dosage range by comparing the determined degree of contamination with past samples for which suitable dosages had been determined (such as in the examples section below). As a general rule, the amount of processing chemicals increases with increasing degree of contamination (including also non-colorant contaminants).

As a next step of this systematic preliminary dosage determination approach, a lab-scale screening procedure may be carried out. That is, a series of experiments may be carried out with the processing chemicals for use in the present invention. In the experiments, the processing water is mixed with the processing chemicals using dosages that vary around the initially estimated dosage, e.g. initially estimated dosage $\pm 10\%$, $\pm 25\%$ and $\pm 50\%$, etc.. This can be done in beakers with manual shaking or magnetic stirring. It is then visually determined, for which minimum dosage among the tested dosages a satisfactory degree of aggregate formation (to be determined by visual inspection of formation of microflakes, as it is usual practice in this technical field), allowing effective removal of flexographic ink and/or water-based inkjet ink, occurs.

Depending on the result of this first screening procedure, one or more further screening procedures may be carried out, wherein the screened dosages are suitably adapted taking the results of the first screening procedure (or previous screening procedures) into account. The dosage identified in this manner can then be up-scaled to the scale of the intended use.

**5.2.7 Physical separation unit/Dissolved air flotation (DAF)**

In the process of the present invention, the admixing of processing chemicals in steps (i) and (ii) causes flocculation of contaminants. Said flocculated contaminants are subsequently removed from the resulting mixture in a physical separation unit. This can typically be selected from a filtration unit, a sedimentation unit, a microflotation unit and the like.

In the process of the present invention, microflotation is preferably conducted by means of a DAF unit. In this process step, the water stream entering the DAF process is pressurized in a pressure vessel under determined pressure, typically to a pressure of 1.7 to 7 bar, preferably to 4 to 7 bar, more preferably to 5 to 7 bar. Simultaneously air is introduced into the tank until water is saturated with air. The operation is preferably continuous and the contact time between air and water is typically 0.5 to 3 minutes. The feed stream is then released to the flotation chamber, where the sudden pressure drop results in release of the saturated air as microscopic sized bubbles. These bubbles are typically in a range of 10 to 400 $\mu$m for the average bubble diameter. The bubble vertical rising rate is typically 0.15 - 0.6 m/min. A typical retention time in the flotation tank is typically 3 - 60 min. The process temperature is typically in a range from 30°C to 80°C, preferably in the range from 40°C to 60°C.

In the present invention, the process is carried out using process water derived from the any loop of the recycled fiber plant. In a preferred embodiment of the present invention, the process is carried out using process water derived from the first loop of the recycled fiber plant.

**5.3 The Use of the Invention**

According to this aspect of the invention, the processing chemicals described herein are used for the removal of flexographic ink components and/or water-based inkjet ink components from process waters. This use involves a mixing of the processing chemicals with the process water to be treated. The ink components form larger aggregates and/or agglomerates, which can be removed more easily from the process water by means of physical separation methods, such as sedimentation, DAF-based microflotation or ultrafiltration, preferably DAF-based microflotation.

**5.4 Examples**

**5.4.1 Chemicals**

The chemicals used are specified in Table 2.

Table 2: Chemicals used in the examples.

| Chemical | Basis structure of the chemical | Name |
|---|---|---|
| *Alum (23%)* | Aluminium Sulphate | Alum |
| *HWT Polysinth AN* | Aluminium Nitrate | AN |
| *NALCO PACO A1* | Polyaluminium Chloride | PAC1 |
| *HWT PAC 2000* | Polyaluminium Chloride | PAC4 |
| *PLUSPAC FD 1465* | Polyaluminium Chloride | PAC2 |
| *PLUSPAC FD S14* | Polyaluminium Chloride | PAC3 |
| *Polyquat 38 U 50* | Polydiallyl-dimethyl-ammonium-chloride | DAD1 |
| *Catiofast BP* | Polydiallyl-dimethyl-ammonium-chloride | DAD2 |
| *Catiofast 159* | Polyamine | PA1 |
| *Polysinth PL 1334* | Polyamine | PA2 |
| *Polysinth PL 1335* | Polyamine | PA3 |

(continued)

| Chemical | Basis structure of the chemical | Name |
|---|---|---|
| *Polysinth PL 1292* | Polyamine | PA4 |
| *Catiofast VFH* | Polyvinylamin | PVAm1 |
| *Polymin VZ* | Polyvinylamin | PVAm2 |
| *Catiofast SF* | Polyethylenimine | PEI |
| *Catiofast FP* | Formaldehyde-amid | FA1 |
| *Polysinth PL 271* | Dicyandiamid-formaldehyde-ammonium chloride | DCD-FA1 |
| *Nalco 77136* | Dicyandiamid-formaldehyde-copolymer | DCD-FA2 |
| *Hydrocol OM6* | Bentonite | BE |
| *Organopol5105* | Polyacrylamide, anionic | aPAM1 |
| *Nalco 71604* | Polyacrylamide, anionic | aPAM2 |
| *Polysinth 669* | Polyacrylamide, cationic | cPAM1 |
| *Organopol6415* | Polyacrylamide, cationic | cPAM2 |
| *Organopol 6425* | Polyacrylamide, cationic | cPAM3 |
| *Organopol 6460* | Polyacrylamide, cationic | cPAM4 |

If not indicated otherwise all chemical dosages are reported as ppm and are based on the weight-amount of chemical-containing product as supplied by the manufacturer. Unless specified otherwise, PAC1-4, DAD1 and DAD2, PA1-4, PVAm1 and PVAm2, PEI, FA1, as delivered from the manufacturer were diluted with water to 10%, alum was used as a 23% solution, bentonite was used undiluted, DCD-FA1 and DCD-FA2 was supplied as liquid in an active polymer content of 50%, Polyacrylamide was supplied as a powder and aPAM1 and 2, cPAM1-4 were dilute with water to 0.1%.

All the chemicals were further diluted when necessary. For instance in chemical screening with 10 ml samples, all polymeric group 1 and 2 chemicals were diluted to 1 % and aluminium salts to 10 % unless specified otherwise. In flocculation and DAF trials the dilution of aluminium products especially was avoided to maintain the performance of chemicals as realistic as possible.

**Inks**

Inkjet inks from a commercial 4-color inkjet press, using both dye and pigment based inks manufactured by Kodak were used. Dye magenta ink is most difficult to remove which is one reason why magenta color was chosen for the trials with process water.

**Aqueous media used in the Experiments**

In the Experiments the aqueous media used were tap water, clear filtrate or cloudy filtrate.

**Experiment 1**

The chemistries were tested in a test tube installation in the room temperature with 10 ml samples of ink diluted in tap water in 1000 ppm concentration. The aluminium products were used as 1.0 % dilutions to distilled water, and the cationic polymers as 0.1 % dilutions.

The mixed ink was diluted in tap water, the $C_0$ of each ink (C, M, Y, K) was 250 ppm, i.e. total ink concentration was 1000 ppm at the beginning of the experiments. The pH value of the pigment ink solution is between 7.5 and 8. The concentration of the group 1 and 2 chemical is given in Tables 3 and 4, wherein the concentration of aPAM and cPAM1 is always 6 ppm. Retention time after admixture of group 1 or 2 chemcial was 20 minutes and after admixture of the group 3 chemical 5 minutes. Subsequently, the flocculated samples were re-filtered with a paper filter to remove flocs. The IRE value was determined as specified above.

In order to classify the IRE values obtained throughout the experiments, the followings classification was applied:

| Range of IRE value [%] | Classification |
|---|---|
| ≤ **80** | Rated as good (0) |
| > **80** | Rated as very good (+) |

The results are represented in Tables 3 and 4.

Table 3: IRE value classification obtained from chemical screening of 1000 ppm pigment-based inkjet inks (C, Y, M, K) in tap water, T = 21 °C.

| Chemicals | Alum + aPAM2 | PAC 1 + aPAM2 | PAC 2 + aPAM2 | DAD 1 + aPAM2 | PA 1 + aPAM2 | PA 4 + aPAM2 | DCD-FA1 + aPAM2 | PEI + aPAM2 | PEI + cPAM1 |
|---|---|---|---|---|---|---|---|---|---|
| Dosage [ppm] | 200 | 200 | 250 | 20 | 22 | 22 | 30 | 20 | 20 |
| IRE value classification | + | + | + | + | + | + | 0 | + | + |

Table 4: IRE value classification obtained from chemical screening of 1000 ppm dye-based inkjet inks (C, Y, M, K) in tap water, T = 21°C.

| Chemicals | Alum + aPAM2 | PAC1 + aPAM2 | PAC 2 + aPAM2 | DAD 1 + aPAM2 | PA 1 + aPAM2 | PA 3 + aPAM2 | DCD-FA1 + aPAM2 | PEI + aPAM2 | PEI + cPAM1 |
|---|---|---|---|---|---|---|---|---|---|
| Dosage [ppm] | 450 | 400 | 300 | 50 | 40 | 50 | 80 | 65 | 65 |
| IRE value classification | 0 | + | + | + | + | + | + | + | + |

As can be seen from Tables 3 and 4, the needed chemical dosage for removal of dye-based inkjet inks from aqueous media is higher as compared to the chemical dosage needed for removal of pigment-based inks from aqueous media. The removal of dye-based inks with alum was poor. Regardless of the higher chemical dosage, DCD-FA1 is more effective in removal of dye-based inks than on pigment-based inks.

**Experiment 2**

Tests were conducted in clear filtrate water. The filtrate was always used fresh in temperatures of about 40 to 50 °C, but the samples cooled down to room temperature 22 °C relatively soon. Pigment inkjet ink Magenta was used in a concentration of $C_0$ of 1000 ppm in clear filtrate water. The concentration of aPAM1 is 6 ppm. Concentrations for the group 1 and 2 chemicals and the results are given in Table 5.

The test procedure itself was identical to the one described in Experiment 1. Additionally, the group 1 or 2 chemical was added until approximately 75 % of the surface charge of the particles was removed (as observed by reduction of cationic demand) and after this the group 3 chemical was added. The tested ink was pigment or dye based magenta ink.

The efficiency of processing chemicals is based on complex interactions between the chemicals and the suspended and colloidal substances in aqueous media. As discussed, these interactions are affected by properties of the aqueous media. As a higher impact of process water than tap water on the ink removal efficiency is expected, the classification of IRE values is adapted.

| Range of IRE value [%] | Classification |
|---|---|
| ≤ 60 | Rated as good (0) |
| > 60 | Rated as very good (+) |

The results are given in Table 5.

**Experiment 2.1**

The same procedure as specified in Experiment 2 was conducted with the difference that dye-based instead of pigment-based inkjet ink Magenta was used in a concentration of $C_0$ of 1000 ppm in clear filtrate water. The results are given in Table 6.

Table 5: Chemistries used, the achieved IRE value classification and the group 1 or 2 chemical dosages in clear filtrate water loop 1 supplemented with 1000 ppm magenta pigment inkjet ink.

| Chemicals | Alum + APAM2 | PAC 1 + APAM2 | PAC 2 + ADAM1 | DAD 1 + APAM2 | PA 1 + APAM2 | PA 4 + APAM2 | DCD-FA1 + ADAM1 | PEI + aPAM1 |
|---|---|---|---|---|---|---|---|---|
| Dosage [ppm] | 550 | 560 | 550 | 70 | 55 | 50 | 250 | 50 |
| IRE value classification | 0 | + | + | + | + | + | + | 0 |

Table 6: Chemistries used, the achieved IRE value classification and the group 1 or 2 chemical dosages in clear filtrate water loop 1 supplemented with 1000 ppm magenta dye inkjet ink.

| Chemicals | PAC1 + aPAM1 | PAC 2 + aPAM1 | DAD 1 + aPAM1 | PA 1 + aPAM1 | PA 3 + aPAM1 | DCD-FA1 + aPAM1 | PEI + aPAM1 |
|---|---|---|---|---|---|---|---|
| Dosage [ppm] | 530 | 530 | 100 | 65 | 60 | 180 | 120 |
| IRE value classification | + | + | + | 0 | + | + | + |

As can be seen from Table 5, alum removes water-based pigment inkjet ink induced color poorly compared to PAC products. PEI removal efficiency for magenta pigment ink is also lower than for magenta dye ink. PAs removal efficiency for magenta dye ink is lower than for magenta pigment ink.

**Experiment 2.2**

The same experiments as in **2.1** and **2.2** were conducted using the dual chemistry PAC2 + aPAM1. aPAM1 concentration was set to 6 ppm throughout the experiment. Further, a multisystem chemistry comprising two processing chemicals of groups 1 and 2 and a third processing chemical of group 3 was used for ink removal with the concentrations given in Table 7, respectively. The chemicals in the multisystem chemistry were added stepwise, leaving 5 minutes between each addition. The IRE value classification is as described in Experiment 2. The results are given in Table 7.

Table 7: Chemistries used, the achieved IRE value classification and the group 1 and 2 chemical dosages in clear filtrate water loop 1 supplemented with 1000 ppm inkjet ink.

| Chemicals | PAC 2 + ADAM1 | PAC 2 + ADAM1 | PAC 2 + PA3 + APAM2 | PAC 2 + DCD-FA1 + APAM2 | PAC 2 + DCD-FA1 + aPAM1 |
|---|---|---|---|---|---|
| Magenta Ink [1000 ppm] | pigment | dye | pigment | pigment | dye |
| Dosage [ppm] | 560 (PAC2) | 530 (PAC2) | 250 (PAC 2) 20 (PA3) | 150 (PAC2) 100 DCD-FA1 | 150 (PAC2) 100 DCD-FA1 |
| IRE value classification | + | + | + | + | + |

Table 7 shows that a multisystem chemistry can provide the same ink removal efficiency classification with a much lower dosage of chemicals compared to a dual chemistry system.

**Experiment 3: Flocculation behavior in beaker glass test**

Pigment or dye inkjet ink Magenta was used in a concentration of $C_0 = 250$ ppm in cloudy filtrate water. The chemicals in the multisystem chemistry were added stepwise while mixing at 500 rpm, leaving 5 minutes between each addition. The supernatant for determination of the IRE value and the turbidity was collected after 10 minutes of settling time. The IRE value classification as specified in Experiment 2 was used and the turbidity classification was made as follows:

| Range of FAU | Classification |
|---|---|
| $\geq$ **400** | Rated as good (0) |
| **< 400** | Rated as very good (+) |

The results are given in Table 8 below.

Table 8: Chemistries used, the achieved IRE value classification, the achieved turbidity value classification in the supernatant of treated cloudy filtrate water supplemented with 250 ppm inkjet ink.

| Chemicals/ dosage | Alum (170 ppm) + DCD-FA1 (150 ppm) + cPAM2 (2 ppm) | Alum (170 ppm) + DCD-FA1 (150 ppm) + cPAM2 (2 ppm) | PAC2 (200 ppm) + PA3 (35 ppm) + ADAM1 (6 ppm) | DCD-FA1 (200 ppm) + BE (150 ppm) + CPAM2 (2 ppm) | PAC2 (200 ppm) + DCD-FA1 (150 ppm) + cPAM2 (2 ppm) |
|---|---|---|---|---|---|
| Magenta Ink [250 ppm] | pigment | dye | pigment | dye | dye |
| IRE value classification | + | 0 | + | + | 0 |
| FAU value classification | 0 | 0 | + | + | + |

It can be seen in Table 8 that the PAC + PA + aPAM chemistry gives very good results with pigment ink. Further, DCD-FA1 + BE + cPAM2 achieves very good removal efficiency with dye ink. It can further be concluded that in this experiment cationic polymers of group 3 are at least equally efficient in color removal compared to anionic polymers of group 3 but at a greatly reduced dosage.

**Experiment 4: Laboratory DAF equipment**

The experiments were conducted with a bench-scale DAF flotation unit (manufactured by DAFSEP - Flotation System Solutions (A Sciential Supply & Equipment Business)), also referred to as LabDAF unit. cPAM2 at a dosage of 2 ppm was used in all samples. Cloudy filtrate with dye-based or pigment-based magenta inkjet ink at a concentration of $C_0$ = 250 ppm was used in all experiments. TSS, PCD and turbidity before and after treatment and $C_1$ for IRE were determined for all samples. Prior the addition of chemicals, the 2 L sample was always heated to 30 °C. The chemicals were added to the sample with constant mixing at 500 rpm. The retention times for the two group 1 and 2 chemicals were set to 5 minutes, for the group 3 chemical to two minutes. Aluminium products and the DCD-FA1 were dosed undiluted, the PA3 was diluted to 10 % and the group 3 polymers to 0.1 % as in all tests. The turbidity of all samples prior to treatment couldn't be measured, because of the limitations of the FAU measurement in Hach-Lange DR2800. In such cases, the original turbidity was evaluated to be 950 FAU, while the highest turbidity measured with the device was 937 FAU. Due to the fact that the hydrodynamic efficiency of a LabDAF unit can be lower than of an industrial one, and because individual errors in the LabDAF unit can occur, the efficiency classification is adapted accordingly. The efficiency of the system was evaluated by the removal of TSS, turbidity, PCD and the IRE value and was classified as follows:

| Classification of | Value | Rated as |
|---|---|---|
| **IRE Value [%]** | $\leq 60$ | + |
| | > 60 | + + |
| **TSS Removal [%]** | $\leq 50$ | + |
| | > 50 | + + |
| **Turbidity Removal [%]** | $\leq 30$ | + |
| | > 30 | + + |
| **PCD removal [%]** | $\leq 20$ | + |
| | > 20 | + + |

Duplicate tests were made and the C1 was additionally measured twice from all LabDAF accepts. The relative standard deviation of all TSS removals was from 0 to 3 %. The relative standard deviation of IRE values between duplicates was below 5 % in three of the 4 tests. The relative standard deviation of the two parallel IRE measurements was always 1 % at highest.

In accordance with the Meri Environmental Solution GmbH the operation parameters for the LabDAF unit were chosen as presented in Table 9.

Table 9: Operation parameters used in the LabDAF test

| Operation parameter | Value | Unit |
|---|---|---|
| *Total sample volume, V* | 2 | L |
| *Flotated sample volume, V* | 0.5 | L |
| *Pressurized feed stream, V* | 0.8 | L |
| *Feed pressurization rate* | 61.5 | % |
| *Inlet flow, $q_v$* | 25 | mL/s |
| *Retention time, t* | 6 | min. |
| *Pressure, p* | 5.0 | bar |
| *Pressurization time, $t_p$* | 10 | min. |

The results of the tests are shown in Table 10.

Table 10. Cloudy filtrate supplemented with dye- or pigment-based magenta inkjet ink, chemicals used and removal efficiency obtained in a LabDAF unit.

| Group 1 | Group 2 | Group 3 | Ink Magenta (250 ppm) | IRE | TSS Removal | Turbidity Removal | PCD Removal |
|---|---|---|---|---|---|---|---|
| PAC2 (200 ppm) | PA3 (35 ppm) | cPAM2 (2 ppm) | pigment | ++ | ++ | ++ | + |

(continued)

| Group 1 | Group 2 | Group 3 | Ink Magenta (250 ppm) | IRE | TSS Removal | Turbidity Removal | PCD Removal |
|---|---|---|---|---|---|---|---|
| PAC2 (200 ppm) | DCD-FA1 (150 ppm) | cPAM2 (2 ppm) | pigment | ++ | - | ++ | - |
| PAC2 (200 ppm) | DCD-FA1 (150 ppm) | cPAM2 (2 ppm) | dye | + | - | ++ | - |
| PAC2 (200 ppm) | DCD-FA1 (150 ppm) | aPAM1 (6 ppm) | dye | + | - | + | - |
| BE (150 ppm) | DCD-FA1 (200 ppm) | cPAM2 (2 ppm) | dye | ++ | ++ | ++ | ++ |
| (-) = not determined | | | | | | | |

From Table 10 it can be seen that the chemistries chosen for both dye-based and pigment-based inkjet inks efficiently remove said inks from cloudy filtrate in a LabDAF unit. The effective removal of pigment magenta from cloudy filtrate can be verified by the IRE value. The ink removal is also correlated to the removal of turbidity. If a residual turbidity and ink concentration after treatment is high, which means that the removal efficiency was low, this may indicate the weakness of produced flocs in terms of resistance to shear stress and mechanical agitation.

**Experiment 5: Flocculation test of inkjet ink in pulping filtrates**

The inks supplemented to the above experiments were fresh, unprinted once. The chemistries on filtrate water that contained printed inks that was repulped were also tested.

In order to obtain filtrate water from inkjet ink printed papers the following procedure was conducted:

A wood-free uncoated (WFU) specialty inkjet paper with cationic surface treatment was printed with a standard test layout printed on one side with only dye magenta ink, referred to IJ-WFU1.

The paper was pulped with the deinking chemistry according to the INGEDE method 11p *(INGEDE 2011b. Project 132 10)*. Water based inks - water circuits and cleaning of such. The chemistry consists of NaOH, oleic acid, $Na_2SiO_3$ and $H_2O_2$. The papers, dilution tap water and chemicals were then pulped with a hand blender to stock consistency 14,8 %. The created pulp was diluted with clear filtrate to stock consistency of 5 %. The pulp was stored at 45 °C for 20 minutes in the first two tests. In the third test sequence, the storage time was 60 minutes. After storage time the pulp was further diluted with clear filtrate to 1,5 % stock consistency. Then five filter pads were prepared. One was done according to the INGEDE method 1 *(INGEDE 2007. INGEDE Method 1. Preparation of Pulps and Filtrates from Deinking Processes. Available at: http://www.ingede.de/ingindxe/methods/ingede-method-01-2007.pdf)* to evaluate filtrate darkening. The additional four filter pads were done in a Büchner funnel with 160 mm filter with intermediate pore size from 4 g of oven-dry pulp. The filtrate was derived from latters. Typical measurements were made to the clear filtrate prior the pulping and to the filtrate gained from both printed and unprinted paper.

In Experiment 5, single-side printed pictures with only dye magenta ink on IJ-WFU1 with high speed inkjet printer were cut so that only the printed parts of the paper could be pulped separately to achieve maximum ink dilution to water.

The flocculation of Experiment 5 was done in a test tube installation using IJ-WFU1. The concentration of the printed dye Magenta inkjet ink (referred to as printed ink M) in the pulping filtrate of IJ-WFU1 was determined to be 52 ppm, the turbidity was determined to be 378 FAU. For a comparison unprinted dye Magenta inkjet inks (referred to as fresh ink M) with a concentration of 250 ppm was supplemented to clear filtrate, the turbidity was determined to be 457 FAU. The efficiency of the system was evaluated by the removal of turbidity and the IRE value and due to the low amount of ink in the pulped filtrate was classified as follows:

| Classification of | Value | Rated as |
|---|---|---|
| **IRE Value [%]** | $\leq 80$ | + |
| | > 80 | + + |
| **Turbidity Removal [%]** | $\leq 80$ | + |
| | > 80 | + + |

The results of this experiment are presented in Table 11.

Table 11: Test results of test tube flocculation of IJ-WFUI pulping filtrate (inkjet ink dye M, 52 ppm) and fresh inkjet ink dye M (250 ppm) in clear filtrate. (-) means used.

| Chemicals/ Dosages | DCD-FA1 (50 ppm) + aPAM1 (6 ppm) | DCD-FA1 (75 ppm) + aPAM1 (6 ppm) | DCD-FA1 (100 ppm) + aPAM1 (6 ppm) | DCD-FA1 (150 ppm) + aPAM1 (6 ppm) | PAC2 (150 ppm) DCD-FA1 (150 ppm) + APAM2 (6 ppm) | PAC2 (150 ppm) DCD-FA1 (150 ppm) + ADAM1 (6 ppm) | PAC2 (200 ppm) + DCD-FA1 (150 ppm) + APAM2 (6 ppm) | PAC2 (200 ppm) + DCD-FA1 (150 ppm) + APAM1 (6 ppm) |
|---|---|---|---|---|---|---|---|---|
| Printed Ink M | Yes | Yes | Yes | Yes | Yes | - | Yes | - |
| Fresh Ink M | - | - | - | - | - | Yes | - | Yes |
| IRE value classification | + | + | ++ | ++ | ++ | + | ++ | ++ |
| Turbidity Removal | + | + | ++ | ++ | ++ | + | ++ | + |

EP 2 727 884 A1

Table 11 shows that the chemistries that have been shown to have high removal efficiency, also work well with the pulping filtrate.

**Experiment 5.1**

The flocculation of Experiment 5.1 was in accordance with Experiment 5. But this time a common WFU designed for digital printing was treated with a capillary tube and a known ink amount of 240 $\mu$l ink per 20 g paper was applied on paper and pulped as described in Experiment 5, referred to as WFU1.

The 20 g of paper forms one pulping batch, which produces approximately one liter of pulping filtrate. The papers were pulped approximately three weeks after the "printing", obtaining the pulping filtrate WFU1 exhibiting the properties of Table 12. Further, clear filtrate water was supplemented with 70 ppm fresh inkjet ink dye M exhibiting the properties of Table 12.

Table 12: Properties of clear filtrate, clear filtrate supplemented with 70 ppm inkjet ink dye M and WFU1, for which an Ink concentration of 82 ppm was determined used in Test 2. (-) means not determined or not present.

| Water/Properties | Clear filtrate | Clear filtrate + Inkjet Ink Magenta dye | Pulping filtrate WFU1 |
|---|---|---|---|
| Ink concentration [ppm] | - | 70 | 82 |
| pH value | 7,33 | 7,49 | 7,78 |
| Turbidity [FAU] | 225 | 246 | 850 |
| Cationic Demand [$\mu$eq/L] | 1653 | 1485 | 1456 |
| Zeta potential [mV] | - | - | -8,1 |

Different to Experiment 5, in Experiment 5.1 the flocculation test was done in a beaker glass installation. The classifications of the Ink removal and turbidity removal efficiencies in Test 2 were done as follows.

| Classification of | Value | Rated as |
|---|---|---|
| IRE Value [%] | < 60 | + |
| | $\geq$ 60 | + + |
| Turbidity Removal [%] | $\leq$ 80 | + |
| | > 80 | + + |

The results of flocculation Test 2 are represented in Table 13.

Table 13: The flocculation Test 2 results of WFU1 (dye M) pulping filtrate and clear filtrate with fresh dye M.

| Chemicals/ Dosages | DCD-FA1 (200 ppm) + BE (150 ppm) + cPAM2 (2 ppm) | DCD-FA1 (200 ppm) + BE (150 ppm) + cPAM2 (2 ppm) | PAC2 (200 ppm) + DCD-FA1 (150 ppm) + cPAM2 (2 ppm) | PAC2 (200 ppm) + DCD-FA1 (150 ppm) + cPAM2 (2 ppm) |
|---|---|---|---|---|
| Water used | Clear filtrate Fresh ink Dye M 70 ppm | Pulping filtrate WFU1 Printed dye M 82 ppm | Clear filtrate Fresh ink Dye M 70 ppm | Pulping filtrate WFU1 Printed dye M 82 ppm |
| IRE value classification | + | ++ | + | ++ |
| Turbidity Removal | ++ | ++ | + | ++ |

It is shown in Table 13 that the ink removal efficiency for the pulping filtrate is higher than for the clear filtrate supplemented with inkjet ink dye M (fresh ink).

**Claims**

**1.** A process for removing flexographic ink and/or water-based inkjet ink from an aqueous medium containing one or more colorant derived from such inks, which process comprises a

step (i) of admixing at least one substance selected from the group 1 consisting of aluminium salts, iron salts, bentonite and cationically surface-modified bentonite,

or from the group 2 consisting of cationic or anionic polymers having a molecular weight of 50,000 to 200,000 g/mol to the medium, retaining the resulting mixture for a retention time in the range from 0 to 60 minutes after the admixing step;

step (ii) wherein at least one substance selected from the group 1, group 2 or a group 3 consisting of an anionic, a cationic or a nonionic polymer is admixed to the aqueous medium obtained in step (i), wherein the substance admixed in step (ii) is different from the substance admixed in step (i), retaining the resulting mixture for a retention time in the range from 0 to 60 minutes after the admixing step; and

step (iii) wherein the mixture obtained in step (ii) is subjected to a physical separation means, preferably a Dissolved Air Flotation (DAF) unit.

2. The process according to claim 1, wherein a further substance selected from group 3 is admixed to the aqueous medium obtained in step (ii), the resulting mixture is retained for a retention time in the range from 0 to 60 minutes after the admixing step and the resultant is fed to step (iii).

3. The process according to claim 1, wherein the substance admixed in step (ii) is selected from group 3.

4. The process according to claim 2, wherein the substance admixed in step (i) is selected from group 1, and wherein the substance admixed in step (ii) is selected from group 2.

5. The process according to claim 1 or 3, wherein the substance selected from group 1, if present, is at least one polyaluminium salt and the substance selected from group 2, if present, is at least one polyamine.

6. The process according to claim 2 or 4, wherein the substance selected from group 1 is at least one polyaluminium salt and the substance selected from group 2 is at least one polyamine.

7. The process according to claim 1 or 3, wherein the substance selected from group 1, if present, is bentonite or cationically surface-modified bentonite and the group 2 substance, if present, is at least one substance selected from the group consisting of dicyandiamide-formaldehyde-ammonium salts and dicyandiamide-formaldehyde-copolymers and the substance of group 3 preferably is at least one polyacrylamide.

8. The process according to claim 2 or 4, wherein the substance selected from group 1 is bentonite or cationically surface-modified bentonite and the group 2 substance is at least one substance selected from the group consisting of dicyandiamide-formaldehyde-ammonium salts and dicyandiamide-formaldehyde-copolymers and the substances of group 3 preferably is at least one polyacrylamide.

9. The process according to claim 2 or 4, wherein the substance selected from group 1 is a polyaluminium salt, and the group 2 substance is selected from a dicyandiamide-formaldehyde-ammonium salt or a dicyandiamide-formaldehyde-copolymer, and the group 3 chemical is preferably a polyacrylamide.

10. The process according to claim 2 or 4, wherein the substances admixed in steps (i) and (ii) are selected from group 1 such that an aluminium salt is admixed in one step and bentonite or cationically surface-modified bentonite is admixed in the other step, wherein preferably the aluminium salt is admixed first.

11. The process according to any one of claims 1 to 10, wherein the process is carried out using process water derived from the first loop of a recycled fiber plant.

12. Use of a at least one substance selected from the group 1 consisting of aluminium salts, iron salts, bentonite and cationically surface-modified bentonite,

or from the group 2 consisting of cationic or anionic polymers having a molecular weight of 50,000 to 200,000 g/mol to the medium,

in combination with at least one substance selected from the group 1, group 2 or a group 3 consisting of an anionic, a cationic or a nonionic polymer for removal of colorants derived from flexographic ink and/or water-based inkjet ink from aqueous media containing such inks by a physical separation means, preferably microflotation procedure using a Dissolved Air Flotation unit, to remove the formed colorant-containing particles.

13. The use of claim 12, wherein a combination of substances is used, wherein said combination of substances is as specified in any one the preceding claims 2 to 10.

14. The use of claim 12 or 13, wherein the physical separation means is a Dissolved Air Flotation unit.

15. The use of any one of claim 12 to 14, wherein the removal of colorants derived from flexographic ink and/or water-based inkjet ink from aqueous media containing such inks by a physical separation means is carried out within the first loop of a recycled fiber plant.

Europäisches
Patentamt

European
Patent Office

Office européen
des brevets

## EUROPEAN SEARCH REPORT

Application Number

EP 12 00 7536

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 681 480 A (LANGLEY JOHN GRAHAM [GB] ET AL) 28 October 1997 (1997-10-28) | 1-4,8, 11-15 | INV. C02F1/24 C02F1/28 |
| Y | * column 3, line 28 - column 4, line 51 * * column 5, line 12 - column 6, line 58; claims; examples 1,2 * | 5,6,9,10 | |
| X | WO 96/35731 A1 (NALCO CHEMICAL CO [US]; CHUNG DANIEL K [CA]; COLLINS JOHN H [US]; RAME) 14 November 1996 (1996-11-14) | 1,3, 12-15 | ADD. C02F101/30 C02F103/14 C02F103/28 |
| Y | * column 30, line 9 - column 33, line 8 * | 9 | |
| X | US 2006/283806 A1 (KOJIMA HITOSHI [JP] ET AL) 21 December 2006 (2006-12-21) * paragraph [0012] * * paragraph [0033] - paragraph [0034] * * paragraph [0091]; claim 6; figure 2 * | 1,3,5,6, 11-13 | |
| X | WO 01/17914 A1 (NALCO CHEMICAL CO [US]) 15 March 2001 (2001-03-15) * page 12, paragraph 5 - page 13, paragraph 4 * * page 23, last paragraph - page 26, paragraph 5; claims * | 1,3, 12-14 | |
| | | | TECHNICAL FIELDS SEARCHED (IPC) |
| | | | C02F |
| X | CN 1 830 823 B (GU JINLONG [CN] JINLONG GU; JIYUAN ZHOU; MAO ZHOU) 1 December 2010 (2010-12-01) | 1,3,7, 12,13 | |
| Y | * abstract * * page 4, paragraph 4 - paragraph 5; claim 1 * | 10 | |
| A | US 5 730 882 A (GALLUP DARRELL L [US] ET AL) 24 March 1998 (1998-03-24) * the whole document * | 1-15 | |
| Y | WO 02/26638 A1 (HAASE RICHARD ALAN [US]) 4 April 2002 (2002-04-04) * page 36, line 17 - page 42, line 10 * | 5,6 | |

The present search report has been drawn up for all claims

| Place of search | Date of completion of the search | Examiner |
|---|---|---|
| Munich | 26 June 2013 | Kurtulan Dogan, M |

EPO FORM 1503 03.82 (P04C01)

## ANNEX TO THE EUROPEAN SEARCH REPORT
## ON EUROPEAN PATENT APPLICATION NO.

EP 12 00 7536

This annex lists the patent family members relating to the patent documents cited in the above-mentioned European search report.
The members are as contained in the European Patent Office EDP file on
The European Patent Office is in no way liable for these particulars which are merely given for the purpose of information.

26-06-2013

| Patent document cited in search report | | Publication date | Patent family member(s) | | Publication date |
|---|---|---|---|---|---|
| US 5681480 | A | 28-10-1997 | NONE | | |
| WO 9635731 | A1 | 14-11-1996 | AT | 188491 T | 15-01-2000 |
| | | | AU | 711097 B2 | 07-10-1999 |
| | | | AU | 5699896 A | 29-11-1996 |
| | | | BR | 9606364 A | 09-09-1997 |
| | | | CA | 2194295 A1 | 14-11-1996 |
| | | | DE | 69606011 D1 | 10-02-2000 |
| | | | EP | 0775165 A1 | 28-05-1997 |
| | | | JP | H10505383 A | 26-05-1998 |
| | | | NO | 970053 A | 07-03-1997 |
| | | | PL | 318058 A1 | 12-05-1997 |
| | | | WO | 9635731 A1 | 14-11-1996 |
| US 2006283806 | A1 | 21-12-2006 | CN | 1880240 A | 20-12-2006 |
| | | | EP | 1734009 A1 | 20-12-2006 |
| | | | JP | 4696713 B2 | 08-06-2011 |
| | | | JP | 2006346610 A | 28-12-2006 |
| | | | KR | 20060132441 A | 21-12-2006 |
| | | | US | 2006283806 A1 | 21-12-2006 |
| WO 0117914 | A1 | 15-03-2001 | AR | 025460 A1 | 27-11-2002 |
| | | | AU | 778290 B2 | 25-11-2004 |
| | | | AU | 6395500 A | 10-04-2001 |
| | | | BR | 0013856 A | 14-05-2002 |
| | | | CA | 2378131 A1 | 15-03-2001 |
| | | | EP | 1218299 A1 | 03-07-2002 |
| | | | JP | 4141141 B2 | 27-08-2008 |
| | | | JP | 2003508221 A | 04-03-2003 |
| | | | MX | PA02001075 A | 20-08-2002 |
| | | | NO | 20021130 A | 07-05-2002 |
| | | | NZ | 517480 A | 30-06-2003 |
| | | | TW | I227704 B | 11-02-2005 |
| | | | US | 6217778 B1 | 17-04-2001 |
| | | | WO | 0117914 A1 | 15-03-2001 |
| CN 1830823 | B | 01-12-2010 | NONE | | |
| US 5730882 | A | 24-03-1998 | NONE | | |
| WO 0226638 | A1 | 04-04-2002 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **VOβ, D. ; SCHABEL, S.** Use of colloidal gas aphrons for separation of water based printing inks and impurities from paper stock suspensions. *INGEDE, 9th Research forum on Recycling,* 18 October 2010